# EUROPEAN PATENT SPECIFICATION

(11) **EP 0 516 662 B1**
(45) Date of publication and mention of the grant of the patent: **10.04.1996**
(21) Application number: 91903961.0
(22) Date of filing: 22.02.1991
(51) Int. Cl.: G01V 1/38, G01S 15/88, G01S 17/88

(54) **ELECTROOPTICAL SENSOR SYSTEM FOR MARINE SEISMIC DATA ACQUISITION**
ELEKTROOPTISCHE WANDLERANORDNUNG FÜR MEERESSEISMISCHE DATENERFASSUNG
SYSTEME DE CAPTEURS ELECTROOPTIQUES POUR SAISIE DE DONNEES SISMIQUES EN MER

(30) Priority: 22.02.1990 SE 9000632
(43) Date of publication of application: 09.12.1992
(73) Proprietor: GATEMAN, Jan, N-1324 Lysaker (NO); GATEMAN, Bertil, S-183 50 Täby (SE)
(72) Inventor: GATEMAN, Jan, N-1324 Lysaker (NO); GATEMAN, Bertil, S-183 50 Täby (SE)
(74) Representative: Allam, Peter Clerk
(86) International application number: NO9100027
(87) International publication number: WO9113373

(56) References cited:
- WO-A-87/04258
- GB-A- 2 063 003
- US-A- 4 242 740
- US-A- 4 569 588
- US-A- 4 583 095
- US-A- 4 787 069

## Description

Previously known methods regarding seismic investigations for determining the occurrence of oil and gas by mapping underground rock formations at sea, are based upon collecting pressure data from sound waves generated by air guns, explosives or other similar sound sources, and which after reflections in the underground formations are sensed by a large number of hydrophones mounted in long cables or streamers and towed under the water surface behind a vessel. These hydrophone streamers are divided in sections (hydrophone groups), which sections are also referred to as channels. The seismic sound source is fired in approximately 25 m intervals, and each subsequent measurement is made in a time period of approximately 6-8 seconds. Normally, each channel is sampled using 2 or 4 ms intervals. The acquired data are recorded separately from each channel and converted to a digital format, since the subsequent processing of the recorded information is very comprehensive and is executed in a digital format.

Since large water areas are to be covered by densely spaced scan lines, these methods involve a time consuming and therefore cost demanding activity, which activity is also to a large extent dependent on outside conditions like seaway, ocean currents and ice.

The purpose of the present invention is to make possible the acquisition of conventional seismic data without using the above-mentioned streamers, and thus simplifying the activity, with economic gains as a consequence.

The present invention relates to a seismic apparatus for detecting marine seismic disturbances generated by a seismic signal source and for acquiring seismic data from the detected disturbances.

An apparatus of this kind is disclosed in published International (PCT) Application WO-A-87/04258 in which a radar system is arranged to survey the water surface to detect interference patterns due to acoustic seismic sources operating at a selected frequency to which the radar frequency is correlated. To this end a large area of the sea surface is surveyed by the radar.

According to the present invention, there is provided a seismic apparatus for detecting marine seismic disturbances generated by a seismic signal source and for acquiring seismic data from the detected disturbances, the sensor system being characterized by:
a laser transmitter locatable above the water surface to illuminate a part of the surface of relatively small area;
an optical receiver locatable above the water surface to detect laser light returned from the air/water interface zone at said surface part;
a signal processor associated with said optical receiver, said optical receiver and signal processor being operable to convert into electrical data signals Doppler-shift information in the returned laser light arising from vertical motion at said air/water interface zone due to seismic pressure waves propagating through the water to said interface zone.

In the following, the invention will be described further by means of the following drawing figures:

Fig. 1 illustrates the basic concept of the present invention.

Fig. 2 illustrates in a schematical manner how the position of a scanned surface part is related to a reference point (the sensor system).

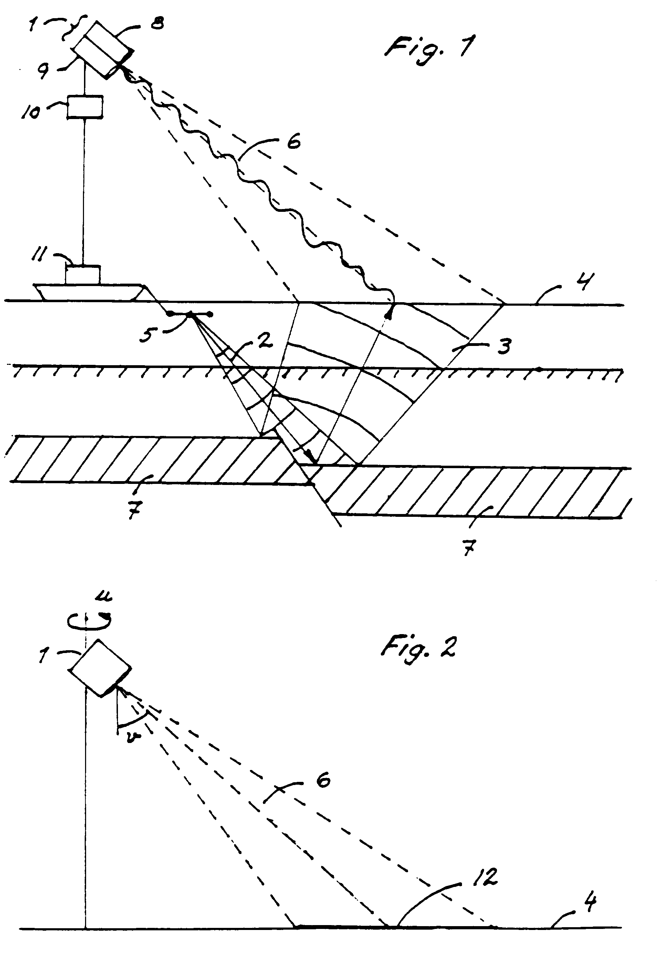

Fig. 1 shows an electrooptic sensor 1 is mounted on a mast in a vessel. The apparatus is thus mounted above the water surface. The sensor apparatus 1 comprises a laser transmitter 8 illuminating a part 12 (Fig. 2) of the water surface, and an optical receiver 9 for detecting laser light returned from the air/water interface zone at the surface part 12. As will be understood from Fig. 2 and the following description, the surface part 12 is a relatively small area of the water surface and is preferably scanned over the water surface. The optical receiver 9 is connected to a signal processor 10. The operation of the apparatus is explained below. The vessel is provided with means for generating seismic pressure waves 2 by means of seismic sound sources 5, and scans in separate surface parts 12 those water areas which are of interest for the data aquisition. These surface parts correspond to the separate hydrophone groups (channels) in the systems used to-day, which normally have an approximate length of 10-20 m. The pressure waves 3 reflected from the underground formations 7 create movements in the water surface 4. The vertical velocity component of the oscillating movement of the water surface constitutes the interesting information, and is sensed by means of the emitted light signal 6, the frequency of which will be changed in the reflection against the water surface, through Doppler shift. The light beam will be reflected not only by the water surface, but also by particles and other discontinuities in the interface layer water/air. The frequency changes of the light signal are detected in the sensor system receiver and converted to live amplitude data which are proportional to the sound pressure of the pressure waves incident on the surface parts. This information is processed further in the signal processor 10 to provide a signal format which is compatible with the signals from the hydrophone groups ordinarily used to-day. The signals are thereafter recorded in a digital format in a standardized data recorder 11.

In this manner the total cost of the electrooptical sensor system can be minimized, since investments already made regarding signal processing and data recording equipment are utilized.

The electrooptic sensor senses continuously the sea surface in surface parts, in the manner indicated in fig. 2. Each surface part corresponds to a hydrophone group (channel) in the known aquisition system. The position of each scanned surface part 12 is related to a reference point by recording the radial angle (u) and the vertical angle (v) in which the light beam is emitted and received in each measuring event.

With to-day's system based upon the use of hydrophones, also undesired signals will be recorded together with the primary signals. Such perturbations are usually constituted by larger or smaller sea waves. Since the recording of the reflected light signal is made over a surface part, the area of this surface part can be chosen in such a manner as to avoid that these surface-generated perturbations are in phase over the scan surface. On the other hand, the seismic primary signals will impinge on the sea surface with an angle close to 90 degrees, and will therefore be recorded in phase over all of the scan surface (the surface part).

It is also possible to arrange two or more electrooptic sensors in different positions, so that the simultaneously emitted light beams impinge on and scan the same surface part with different incidence angles. In this case the recorded data will contain information to render possible a further forward filtering and amplifying of the seismic primary signals in relation to the surface-generated perturbations. Alternative the two sensors can be arranged to simultaneously scan different surface parts.

The sensor apparatus has been described as located in a vessel also equipped with the means for generating seismic pressure waves. The apparatus may also be employed located in an air-borne vessel, or in a fixed installation at sea or on land.

## Claims

1. A seismic apparatus for detecting marine seismic disturbances generated by a seismic signal source and for acquiring seismic data from the detected disturbances, the sensor system being characterized by:
a laser transmitter (8) locatable above the water surface to illuminate a part (12) of the surface of relatively small area;
an optical receiver (9) locatable above the water surface to detect laser light returned from the air/water interface zone at said surface part;
a signal processor (10) associated with said optical receiver (9), said optical receiver and signal processor being operable to convert into electrical data signals Doppler-shift information in the returned laser light arising from vertical motion at said air/water interface zone due to seismic pressure waves propagating through the water to said interface zone.

2. A sensor apparatus as claimed in Claim 1 in which said transmitter (8) and receiver (9) are operable to scan said surface part over the water surface.

3. A sensor apparatus as claimed in Claim 1 or 2 in which said surface part area is substantially equivalent to one hydrophone group (channel) in a streamer of conventional hydrophones.

4. A sensor system comprising two sensor apparatus each as claimed in Claim 2 or Claims 2 and 3, wherein the two sensor apparatus are located and operated in such a manner as to scan the water surface simultaneously at different surface parts.

5. A sensor system comprising two sensor apparatus as claimed in Claim 2 or Claims 2 and 3, wherein the two sensor apparatus are located and operated to scan the same surface part with different angles of incidence.

6. A sensor installation comprising a sensor apparatus as claimed in Claim 1, 2 or 3 or a sensor system as claimed in Claim 4 or 5, wherein the apparatus or system is located in a vessel equipped with means (5) for generating seismic pressure waves.

7. A sensor apparatus as claimed in Claim 1, 2 or 3 or a sensor system as claimed in Claim 4 or 5, wherein the apparatus or system is located in an air-borne vessel, or in a fixed installation at sea or on land.

## Patentansprüche

1. Eine seismische Ausrüstung zum Nachweisen von durch eine seismische Signalquelle erzeugten seismischen Störungen zur See und zur Erfassung von seismischen Daten aufgrund der nachgewiesenen Störungen, wobei das Sensorsystem durch folgende Vorrichtungen gekennzeichnet ist:
einen Lasersender (8), der oberhalb des Wasserspiegels angeordnet werden kann, um einen relativ kleinflächigen Bereich (12) der Oberfläche zu beleuchten;
einen optischen Empfänger (9), der oberhalb des Wasserspiegels angeordnet werden kann, um in dem besagten Oberflächenbereich von der Grenzfläche zwischen Luft und Wasser zurückgeworfenes Laserlicht nachzuweisen;
einen dem besagten optischen Empfänger (9) zugeordneten Signalprozessor (10), wobei der besagte optische Empfänger und der besagte Signalprozessor so betätigt werden können, daß in dem zurückgeworfenen Laserlicht enthaltene Doppler-Verschiebung betreffende Informationen in elektrische Datensignale umgewandelt werden, wobei die besagten Informationen durch senkrechte Bewegung an der besagten Grenzfläche zwischen Luft und Wasser bedingt sind, die durch die Fortpflanzung seismischer Druckwellen durch das Wasser hindurch zu dem besagten Grenzflächenbereich bewirkt wird.

2. Ein Sensorgerät nach Anspruch 1, bei dem der besagte Sender (8) und der besagte Empfänger (9) so betätigt werden können, daß sie den besagten Oberflächenbereich oberhalb des Wasserspiegels abtasten.

3. Ein Sensorgerät nach Anspruch 1 oder Anspruch 2, bei dem die besagte Fläche des Oberflächenbereichs im wesentlichen einer Hydrophongruppe (einem Kanal) in einem Streamer herkömmlicher Hydrophone entspricht.

4. Eine Sensorsystem, umfassend zwei Sensorgeräte jeweils nach Anspruch 2 oder den Ansprüchen 2 und 3, bei dem die beiden Sensorgeräte so angeordnet und betätigt werden, daß sie den Wasserspiegel gleichzeitig in verschiedenen Oberflächenbereichen abtasten.

5. Ein Sensorsystem, umfassend zwei Sensorgeräte nach Anspruch 2 oder den Ansprüchen 2 und 3, bei dem die beiden Sensorgeräte so angeordnet und betätigt werden, daß sie den gleichen Oberflächenbereich unter verschiedenen Einfallswinkeln abtasten.

6. Eine Sensoranlage, umfassend ein Sensorgerät nach Anspruch 1, 2 oder 3 oder ein Sensorsystem nach Anspruch 4 oder 5, bei der das Gerät bzw. System in einem Schiff mit einem Mittel (5) zur Erzeugung seismischer Druckwellen angeordnet ist.

7. Ein Sensorgerät nach Anspruch 1, 2 oder 3 oder ein Sensorsystem nach Anspruch 4 oder 5, bei dem das Gerät oder System in einem Luftfahrzeug oder in einer festen Anlage zur See oder auf dem Lande angeordnet ist.

## Revendications

1. Appareil sismique pour la détection de perturbations sismiques marines générées par une source de signaux sismiques et pour l'acquisition de données sismiques sur les perturbations détectées, le système de détection étant caractérisé par les éléments suivants :
un capteur laser (8) pouvant être situé au-dessus de la surface de l'eau pour éclairer une partie (12) de la surface d'une zone relativement petite;
un récepteur optique (9) pouvant être situé au-dessus de la surface de l'eau pour détecter le rayon laser renvoyé par la zone d'interface air/eau à ladite portion de surface;
un processeur de signaux (10) associé audit récepteur optique (9), ledit récepteur optique et ledit processeur de signaux capables de transformer en signaux de données électriques toutes les informations de décalage Doppler contenues dans le rayon laser renvoyé par le mouvement vertical à ladite interface air/eau compte tenu des ondes de pression sismiques se propageant dans l'eau jusqu'à ladite zone d'interface.

2. Appareil de détection selon la Revendication 1 dans laquelle ledit émetteur (8) et ledit récepteur (9) peuvent balayer ladite portion de surface à la surface de l'eau.

3. Appareil de détection selon la Revendication 1 ou 2 dans laquelle ladite portion de surface est plus ou moins équivalente au groupe (canal) hydrophone d'un ruban antiradar d' hydrophones conventionnels.

4. Système de détection comprenant chacun deux appareils de détection selon la Revendication 2 ou bien les Revendications 2 et 3, caractérisé en ce que les deux appareils de détection sont situés et commandés de manière à balayer la surface de l'eau simultanément à des portions de surface différentes.

5. Système de détection comprenant chacun deux appareils de détection selon la Revendication 2 ou bien les Revendications 2 et 3, caractérisé en ce que les deux appareils de détection sont situés et commandés de manière à balayer la même portion de surface avec des angles d'incidence différents.

6. Installation de détection comprenant un appareil de détection selon la Revendication 1, 2 ou 3 ou bien système de détection selon la Revendication 4 ou 5, caractérisé en ce que l'appareil ou le système est situé dans un vaisseau équipé de moyens (5) de production d'ondes de pression sismiques.

7. Appareil de détection selon la Revendication 1, 2 ou 3 ou bien système de détection selon la Revendication 4 ou 5 caractérisé en ce que l'appareil ou le système est situé dans un engin aéroporté ou bien dans une installation fixe sur mer ou sur terre.
